# EUROPEAN PATENT APPLICATION

(11) **EP 4 811 399 A1**
(43) Date of publication of application: **23.09.2026**
(21) Application number: 25165389.5
(22) Date of filing: 21.03.2025
(51) Int. Cl.: H01B 7/285

(54) **POWER CABLE WITH WATER-BLOCKING CAPABILITY**

(71) Applicant: NKT HV Cables AB, 371 60 Lyckeby (SE)
(72) Inventor: ANTONISCHKI, Jörn, Lyckeby (SE)
(74) Representative: Kransell & Wennborg KB

(57) **Abstract**

A power cable (1) comprising: a multi-strand conductor, an insulation system arranged around the multi-strand conductor, the insulation system comprising an inner semiconducting layer arranged around the multi-strand conductor, an insulation layer arranged around the inner semiconducting layer, and an outer semiconducting layer arranged around the insulation layer, and a water-blocking compound, wherein the multi-strand conductor alternatingly has first longitudinal axial sections (3) with the water-blocking compound filling all voids between conductor strands of the multi-strand conductor to restrict longitudinal water ingress inside the multi-strand conductor, and second longitudinal axial sections (5) free of the water-blocking compound.

## Description

### TECHNICAL FIELD

The present disclosure generally relates to power cables with a longitudinal water-blocking feature in the conductor.

### BACKGROUND

Some power cables have non-solid conductors, in the following referred to as multi-wire or multi-strand conductors. Multi-wire conductors are made by stranding a plurality of wires. Such wires may for example have a circular or elliptical cross-section, or they may have other shapes, such as in the case of keystone or profiled conductors.

The filling grade of the wires is typically in the range of 92%-96%, with the lower figure being typical for stranded round wire conductors and the higher figure being typical for keystone conductors. Since the filling grade is not 100%, there is a risk that water may migrate longitudinally into the interstices between the wires for example after a cable fault.

Water swelling tapes, which traditionally have been used to restrict longitudinal water migration, can easily crumble. This may reduce the water migration restriction properties of these tapes. It has also been found that using water swelling tape may result in the release of components from the water swelling tape that migrate into the solid insulation system of the power cable, potentially resulting in a reduced performance of the solid insulation system. EP3973556 B1, which aims to solve this issue, discloses an HVDC power cable comprising a water-blocking compound including polybutadiene and a carbon-based component filling the voids between the conductor wires.

### SUMMARY

A drawback of filling a multi-strand conductor with a water-blocking compound is that the individual conductor wires need to be thoroughly cleaned wherever a joint is to be made, to enable jointing of the conductor in a sufficiently reliable way. For example, to perform welding very clean metal surfaces are generally required. However, if a water-blocking compound is provided between the conductor wires, it may take several hours of manual cleaning per joint to reach the required level of cleanness of the individual conductor wires, in part due to the high viscosity of the water-blocking compound.

In view of the above, an object of the present disclosure is to provide a power cable and a method of manufacturing a power cable which solve or at least mitigates existing problems of the state of the art.

There is hence according to a first aspect of the present disclosure provided a power cable comprising: a multi-strand conductor, an insulation system arranged around the multi-strand conductor, the insulation system comprising an inner semiconducting layer arranged around the multi-strand conductor, an insulation layer arranged around the inner semiconducting layer, and an outer semiconducting layer arranged around the insulation layer, and a water-blocking compound, wherein the multi-strand conductor alternatingly has first longitudinal axial sections with the water-blocking compound filling all voids between conductor strands of the multi-strand conductor to restrict longitudinal water ingress inside the multi-strand conductor, and second longitudinal axial sections free of the water-blocking compound.

As a result, the multi-strand conductor as a whole is watertight enough to prevent longitudinal ingress of moisture to an unacceptable long portion of the power cable, while at the same time facilitating jointing in the second longitudinal axial sections free from the water-blocking compound.

According to one embodiment the first longitudinal sections have a length in a range of 1-30 m, such as 2-20 m, such as 5-15 m. This range ensures that longitudinal water intrusion can be restricted in the multi-strand conductor.

According to one embodiment the second longitudinal sections have a length in a range of 1-100 m, such as 5-100 m, such as 10-100 m.

The above ranges also take into consideration what is practical and feasible in the production line with regards to application of the water-blocking compound to the individual conductor strands.

According to one embodiment the first longitudinal sections and the second longitudinal sections are arranged alternatingly along an entire length of the multi-strand conductor.

According to one embodiment the water-blocking compound comprises a thermoplastic elastomer.

According to one embodiment the thermoplastic elastomer is a synthetic rubber.

According to one embodiment the water-blocking compound is a shear-thinning non-Newtonian fluid.

According to one embodiment the water-blocking compound is hydrophobic.

There is according to a second aspect of the present disclosure provided a method of manufacturing a power cable, comprising: a) forming a multi-strand conductor in a conductor stranding line, wherein step a) involves stranding a plurality of conductor strands and applying a water-blocking compound on the conductor strands during the stranding intermittently such that the multi-strand conductor alternatingly has first longitudinal axial sections where the water-blocking compound fills all voids between the conductor strands of the multi-strand conductor to restrict longitudinal water ingress inside the multi-strand conductor, and second longitudinal axial sections free of the water-blocking compound, and b) providing an insulation system around the multi-strand conductor, the insulation system comprising an inner semiconducting layer arranged around the multi-strand conductor, an insulation layer arranged around the inner semiconducting layer, and an outer semiconducting layer arranged around the insulation layer.

According to one embodiment the applying involves pumping the water-blocking compound onto the conductor strands.

According to one embodiment the water-blocking compound has a temperature of at least 150 °C during the pumping.

According to one embodiment the water-blocking compound has a viscosity in a range of 1000-2000 Pa*s at a shear rate of 2 rpm at 150 °C.

According to one embodiment the first longitudinal sections have a length in a range of 1-30 m, such as 2-20 m, such as 5-15 m.

According to one embodiment the second longitudinal sections have a length in a range of 1-100 m, such as 5-100 m, such as 10-100 m.

According to one embodiment the first longitudinal sections and the second longitudinal sections are arranged alternatingly along the entire length of the multi-strand conductor.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a side view of a portion of an example of a power cable;
Fig. 2 is a cross-section of the power cable along lines A-A in Fig. 1;
Fig. 3 is a cross-section of the power cable in Fig. 1 along lines B-B in Fig. 1; and
Fig. 4 is a flowchart of a method of manufacturing the power cable in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

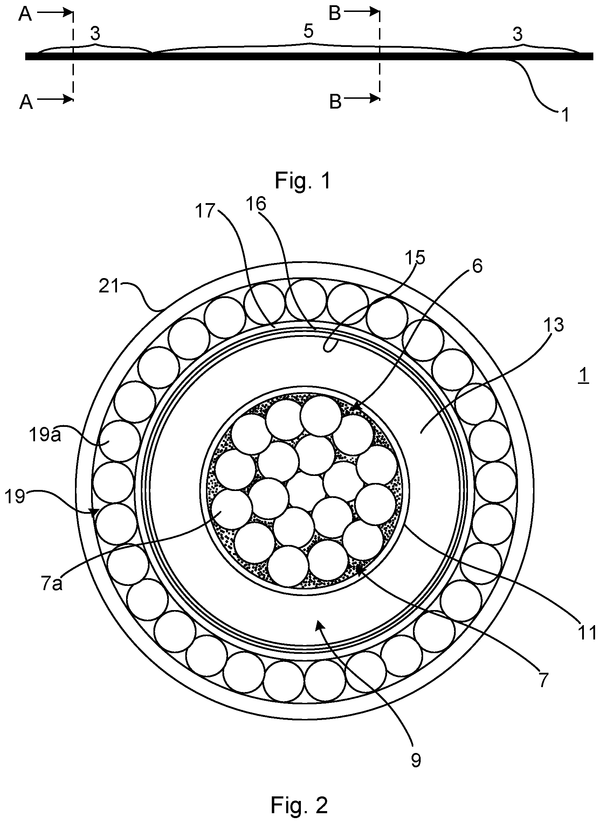

Fig. 1 schematically shows a sideview of a portion of a power cable 1.

The power cable 1 may be a submarine power cable or an underground power cable, i.e., a land cable.

The power cable 1 may be an AC power cable comprising a single power core or a plurality of stranded power cores, or a DC power cable comprising a single power core or a plurality of stranded cores.

The power cable 1 may be a medium voltage or a high voltage power cable. With medium voltage is herein meant 1-72 kV, and with high voltage is meant a voltage above 72 kV.

The power cable 1 comprises a multi-strand conductor that alternatingly has first longitudinal axial sections 3 with a water-blocking compound between conductor strands of the multi-strand conductor to restrict longitudinal water ingress inside the multi-strand conductor, and second longitudinal axial sections 5 free of the water-blocking compound. There is thus no water-blocking compound in the second longitudinal sections 5.

The first longitudinal axial sections 3 and the second longitudinal axial sections 5 may be arranged alternatingly along the entire length of the multi-strand conductor, and thus along the entire length of the power cable 1.

The first longitudinal sections 3 may have a length in a range of 1-30 m, such as 2-20 m, such as 5-15 m.

The second longitudinal sections 5 may have a length in a range of 1-100 m, such as 5-100 m, such as 10-100 m.

Fig. 2 schematically shows a cross-section of the power cable 1 along lines A-A in Fig. 1, taken in a first longitudinal axial section 3.

In the example, the power cable 1 has one power core but could alternatively have more than one power core.

The exemplified power cable 1 is a submarine power cable but could alternatively be an underground power cable. In the latter case, the general structure of the power cable would be somewhat different, as it would be configured for underground use, and thus have a different screen, and be free of armouring, for example.

The power cable 1 comprises a multi-strand conductor 7. The multi-strand conductor 7 may typically comprise copper or aluminium.

The multi-strand conductor 7 comprises a plurality of conductor strands or wires 7a. The conductor strands 7a are arranged in a stranded configuration. The multi-wire conductor 7 has interstices between the conductor strands 7a. The fill-factor of the multi-strand conductor 7 as provided by the conductor strands 7a may for example be in the range 92-96%. This means that the conductor material fills 92-96% of the cross-sectional area of the multi-strand conductor 7.

In the present example, the conductor strands 7a are rounded wires and the multi-strand conductor 7a is a stranded round conductor. The multi-wire conductor could alternatively for example be a keystone or profiled conductor, or a segmental or Milliken conductor.

The power cable 1 comprises a water-blocking compound 6. The water-blocking compound 6 is arranged to restrict longitudinal water migration into the power cable 1. The water-blocking compound 6 is arranged between the interstices of the conductor strands 7a. The conductor strands 7a are arranged in layers, and the interstices or voids in and between all layers may be filled with the water-blocking compound 6. All the interstices or voids between the conductor strands 7a of the multi-strand conductor 7 are hence filled with the water-blocking compound 6.

The water-blocking compound 6 may be arranged radially outside of the multi-strand conductor 7, on the outer surface of the outermost layer of the conductor strands 7a.

The water-blocking compound 6 may comprise a thermoplastic elastomer, such as a synthetic rubber. The synthetic rubber may for example comprise or be polybutadiene although other materials with similar characteristics could be used alternatively.

The water-blocking compound 6 may be a shear-thinning non-Newtonian fluid. The apparent viscosity of the water-blocking compound 6 thus decreases as the shear rate increases.

The water-blocking compound 6 may be hydrophobic.

The exemplified power cable 1 comprises an insulation system 9.

The insulation system 9 comprises an inner semiconducting layer 11 provided around the multi-wire conductor 7. The inner semiconducting layer 11 acts as a conductor screen. The exemplified inner semiconducting layer 11 may be polymer-based and may comprise a conductive component such as carbon black.

The insulation system 9 comprises an insulation layer 13. The insulation layer 13 is provided around the inner semiconducting layer 11. The insulation layer 13 is hence arranged radially outwards of the inner semiconducting layer 11. The insulation layer 13 is a solid insulation layer, typically comprising a polymeric material such as a thermoplastic or a thermosetting polymer. The polymeric material may for example be polyethylene-based, polypropylene-based, ethylene propylene rubber, or ethylene propylene diene monomer rubber.

The insulation system 9 comprises an outer semiconducting layer 15. The outer semiconducting layer 15 is provided around the insulation layer 13. The outer semiconducting layer 15 is hence arranged radially outwards of the insulation layer 13. The insulation layer 13 is sandwiched between the inner semiconducting layer 11 and the outer semiconducting layer 15.

The outer semiconducting layer 15 acts as an insulation screen for the insulation layer 15. The exemplified outer semiconducting layer 15 may be polymer-based and may comprise a conductive component such as carbon black.

The exemplified power cable 1 may comprise a metallic radial water barrier 16. The metallic radial water barrier 16 may be provided around the outer semiconducting layer 15.

The metallic radial water barrier 16 may for example be longitudinally welded.

The metallic radial water barrier 16 may for example comprise copper or stainless steel.

The power cable 1 may comprise a polymer layer 17 arranged around the metallic radial barrier 16, if present, or outside the outer semiconducting layer 15. The polymer layer 17 may be an extruded polymer layer.

The power cable 1 may comprise an armour 19 arranged around the polymer layer 17. The armour 19 may comprise a plurality of helically wound armour wires 19a. The armour wires 19a may for example be composed of metal such as steel, or of synthetic material such as jacketed aramid fibres, or the armour 19 may comprise some armour wires 19a of metal and some of synthetic material.

The power cable 1 has an outer serving or sheath 21 which forms the outermost layer of the power cable 1. The outer serving or sheath 21 may for example comprise a polymeric material.

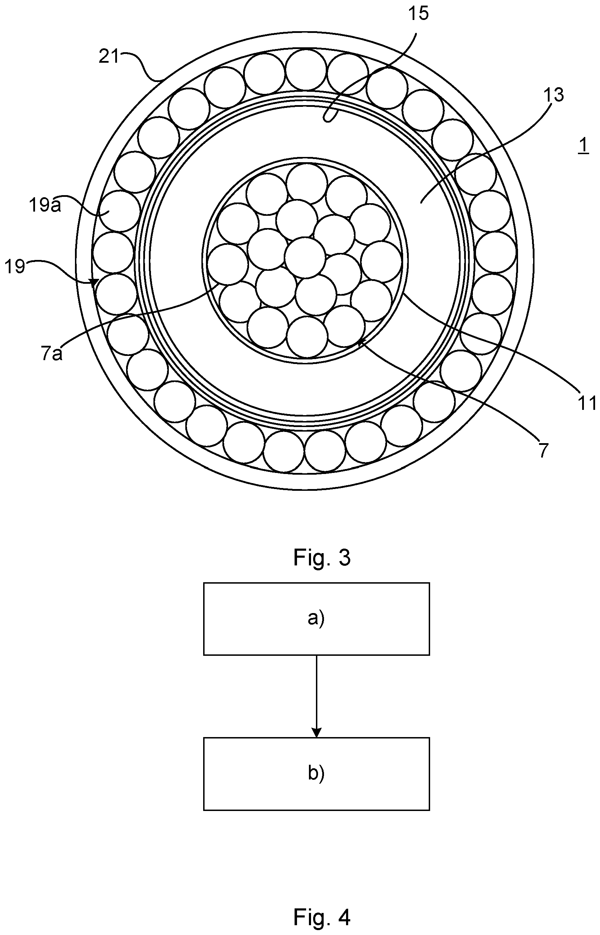

Fig. 3 is a cross-section along lines B-B in Fig. 1, taken in a second longitudinal axial section 5. According to the example, the general structure of the power cable 1 in the second longitudinal axial section 5 is identical to that of the power cable 1 in the first longitudinal axial section 3, except that the multi-strand conductor 7 is free of the water-blocking compound 6.

The power cable 1 may comprise a single factory cable length which includes a plurality of first longitudinal axial sections 3 and a plurality of second axial sections 5 arranged alternatingly along the single factory cable length. With single factory cable length is meant a cable length that is without any conductor joints or with one or more flexible joints only, i.e., no rigid joints.

With reference to Fig. 4 a method of manufacturing the power cable 1 will now be described.

In a step a) the multi-strand conductor 7 is formed in a conductor stranding line. As the individual conductor strands 7a spooled off respective bobbins and stranded in the conductor stranding line, the water-blocking compound 6 is applied onto the individual conductor strands 7a layer by layer as the multi-strand conductor 7 is built up. The water-blocking compound 6 may be applied by pumping the water-blocking compound 6 onto the individual strands 7a. The water-blocking compound 6 is heated to an elevated temperature during the pumping. The temperature may be at least 150 °C.

The water-blocking compound 6 may have a viscosity in a range of 1000-2000 Pa*s at a shear rate of 2 rpm at 150 °C.

Step a) involves applying the water-blocking compound 6 for a length of the multi-strand conductor 7 formed in the conductor stranding line corresponding to the first longitudinal axial section 3. This length may be in a range of 1-30 m, such as 2-20 m, such as 5-15 m. The water-blocking compound 6 is applied such that it fills all voids between the conductor strands 7a of the multi-strand conductor 7 to restrict longitudinal water ingress or migration inside the multi-strand conductor 7.

The application of the water-blocking compound 6 is then terminated for a length of the multi-strand conductor 7 formed in the conductor stranding line corresponding to the second longitudinal axial section 5 of the multi-strand conductor 7. This length may be in a range of 1-100 m, such as 5-100 m, such as 10-100 m. The water-blocking compound 6 is then again applied to the conductor strands 7a for a length of the multi-strand conductor 7 formed in the conductor stranding line corresponding to the first longitudinal axial section 3, followed by the termination of the application of the water-blocking compound 6 for a length of the multi-strand conductor 7 formed in the conductor stranding line corresponding to the second longitudinal axial section 5 of the multi-strand conductor 7, and this alternating application and termination of the application of the water-blocking compound 6 is repeated along the entire length of the multi-strand conductor 7. The water-blocking compound 6 is thus applied intermittently along the length of the multi-strand conductor 7 with the first and second longitudinal axial sections 3, 5 arranged alternatingly along the longitudinal axial direction of the multi-strand conductor 7.

The first longitudinal axial sections 3 where the water-blocking compound 6 is applied to the conductor strands 7a of the multi-strand conductor 7 may all have the same length, or the length of the first longitudinal axial sections 3 may vary e.g., in a range of 1-30 m, such as 2-20 m, such as 5-15 m.

The second longitudinal axial sections 5 where the conductor strands 7a of the multi-strand conductor 7 are free from the water-blocking compound 6 may all have the same length, or the length of the second longitudinal axial sections 5 may vary e.g., in a range of 1-100 m, such as 5-100 m, such as 10-100 m.

It is to be noted that in the first longitudinal axial sections 3, the amount of the water-blocking compound 6 between the conductor strands 7a may gradually decrease in an axial end portion before it transitions to a second longitudinal axial section 5. The water-blocking compound 6 may thus not fill all voids in a region of the first longitudinal axial sections 3 before it transitions into a second longitudinal axial section 5, or as a second longitudinal axial section 5 transitions into a first longitudinal axial section 3. This may be the due to the high viscosity of the water-blocking compound 6, which makes it challenging to turn "on" and turn "off" the application of the water-blocking compound 6 in discrete steps.

In a step b) the insulation system 9 is provided around the multi-strand conductor 7. The insulation system 9 may be applied around the multi-strand conductor 7 in an extrusion line such as a triple extrusion line.

Additional layers, such as the metallic radial water barrier 16, the polymer layer 17, the armour 19, and the outer serving or sheath 21 are subsequently provided around the insulation system 9.

In case the power cable 1 is to be joined with another power cable, and a joint, either a flexible joint or a rigid joint, is to be prepared, the power cable 1 may be cut in a second longitudinal axial section 5 sufficiently far away from a first longitudinal axial section 3 to be able to prepare the multi-strand conductor 7 for conductor jointing without having to clean the multi-strand conductor 7 from the water-blocking compound 6.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Power cable (1) comprising:
a multi-strand conductor (7),
an insulation system (9) arranged around the multi-strand conductor (7), the insulation system (9) comprising an inner semiconducting layer (11) arranged around the multi-strand conductor (7), an insulation layer (13) arranged around the inner semiconducting layer (11), and an outer semiconducting layer (15) arranged around the insulation layer (13), and
a water-blocking compound (6),
wherein the multi-strand conductor (7) alternatingly has first longitudinal axial sections (3) with the water-blocking compound (9) filling all voids between conductor strands (7a) of the multi-strand conductor (7) to restrict longitudinal water ingress inside the multi-strand conductor (7), and second longitudinal axial sections (5) free of the water-blocking compound (6).

2. Power cable (1) as claimed in claim 1, wherein the first longitudinal sections (3) have a length in a range of 1-30 m, such as 2-20 m, such as 5-15 m.

3. Power cable (1) as claimed in claim 1 or 2, wherein the second longitudinal sections (5) have a length in a range of 1-100 m, such as 5-100 m, such as 10-100 m.

4. Power cable (1) as claimed in any of the preceding claims, wherein the first longitudinal sections (3) and the second longitudinal sections (5) are arranged alternatingly along an entire length of the multi-strand conductor (7).

5. Power cable (1) as claimed in any of the preceding claims, wherein the water-blocking compound (6) comprises a thermoplastic elastomer.

6. Power cable (1) as claimed in claim 5, wherein the thermoplastic elastomer is a synthetic rubber.

7. Power cable (1) as claimed in any of the preceding claims, wherein the water-blocking compound (6) is a shear-thinning non-Newtonian fluid.

8. Power cable (1) as claimed in any of the preceding claims, wherein the water-blocking compound (6) is hydrophobic.

9. Method of manufacturing a power cable (1), comprising:
a) forming a multi-strand conductor (7) in a conductor stranding line,
wherein step a) involves stranding a plurality of conductor strands (7a) and applying a water-blocking compound (6) on the conductor strands (7a) during the stranding intermittently such that the multi-strand conductor (7) alternatingly has first longitudinal axial sections (3) where the water-blocking compound (6) fills all voids between the conductor strands (7a) of the multi-strand conductor (7) to restrict longitudinal water ingress inside the multi-strand conductor (7), and second longitudinal axial sections (5) free of the water-blocking compound (6), and
b) providing an insulation system (9) around the multi-strand conductor (7), the insulation system (9) comprising an inner semiconducting layer (11) arranged around the multi-strand conductor (7), an insulation layer (13) arranged around the inner semiconducting layer (11), and an outer semiconducting layer (15) arranged around the insulation layer (13).

10. Method as claimed in claim 9, wherein the applying involves pumping the water-blocking compound (6) onto the conductor strands (7a).

11. Method as claimed in claim 10, wherein the water-blocking compound (6) has a temperature of at least 150°C during the pumping.

12. Method as claimed in claim 11, wherein the water-blocking compound (6) has a viscosity in a range of 1000-2000 Pa*s at a shear rate of 2 rpm at 150°C.

13. Method as claimed in any of claims 9-12, wherein the first longitudinal sections (3) have a length in a range of 1-30 m, such as 2-20 m, such as 5-15 m.

14. Method as claimed in any of claims 9-13, wherein the second longitudinal sections (5) have a length in a range of 1-100 m, such as 5-100 m, such as 10-100 m.

15. Method as claimed in any of claims 9-14, wherein the first longitudinal sections (3) and the second longitudinal sections (5) are arranged alternatingly along the entire length of the multi-strand conductor (7).
